# EUROPEAN PATENT APPLICATION

(11) **EP 3 706 290 A1**
(43) Date of publication of application: **09.09.2020**
(21) Application number: 19160767.0
(22) Date of filing: 05.03.2019
(51) Int. Cl.: H02K 3/04, H02K 15/04

(54) **METHOD FOR WINDING OF A CONCENTRATED COIL FOR AN ELECTRIC MACHINE**

(71) Applicant: Kongsberg Maritime CM AS, 6025 Ålesund (NO)
(72) Inventor: LØVLI, Edgar, 6025 Ålesund (NO)
(74) Representative: Acapo AS

(57) **Abstract**

A method for winding a coil for electric machines, and a coil wound according to this method. Wherein the method comprises the following steps: placing a wire against a form, leaving a first length of the wire and a second length of the wire extending from the form, wherein the first length has a first end and the second length has a second end; winding the first length in a first direction round the form, such that the first end of the first length is ending in an outer layer of the plurality of layers; winding the second length in a second direction round the form, wherein the second direction is opposite the first direction, wherein the second end of the second length is ending in an outer layer of the plurality of layers, wherein all layers and levels of the coil are filled.

## Description

### Background of the invention

### Field of Invention

The invention relates to coil winding in general and more specifically to a method for winding a coil for electric machines, and a coil wound according to this method.

### Problems of the prior art

Concentrated coils are used in windings of quite a wide class of electric machines. A well-designed electric machine is often characterized by a high slot-fill factor providing high thermal conductivity inside the slot that improves the heat removal from the conductors to the iron cores. High slot-fill factor can be achieved when there is little of insulation, impregnation material or air between the conductors in the slot and there is no coil turns sticking-out sideways. For many machines the optimal shape of the coil is a rectangular or a parallelogram shape following the shape of the slots and making possible insertion of the coils into the slots.

To make a solid consolidated coil one usually uses a form on which the coil is wound. The common practice is doing the winding as a continuous process, winding layer after layer moving up and down the form. This practice is described in e.g. EP0920107 A2 and US2005/0236921 A1. The results of such a process is, however, not optimal since either some turns of the coil will stick out or the end wire should be bent to be led out of the center of the coil.

There is therefore a need for a method and a system to overcome the above mentioned problems.

### Summary of the invention

### Problems to be solved by the invention

The present invention solves the problems of the prior art and makes possible production of a improved concentrated coil by changing the winding process from the conventional continuous process to a process including two main stages involving winding the coil's wire in two opposite directions.

### Means of solving the problems

The objectives are achieved according to the invention by a method as defined in claim 1 and a coil as defined in claim 7 wound according to the said method.

A number of non-exhaustive embodiments, variants or alternatives of the invention are defined by the dependent claims.

In a first aspect of the present invention a method is provided for winding a coil for electric machines, wherein the coil is arranged with a plurality of layers and a plurality of levels, wherein the method comprises the following steps: placing a wire against a form, leaving a first length of the wire and a second length of the wire extending from the form, wherein the first length has a first end and the second length has a second end; winding the first length in a first direction round the form, such that the first end of the first length is ending in an outer layer of the plurality of layers; winding the second length in a second direction round the form, wherein the second direction is opposite the first direction, wherein the second end of the second length is ending in an outer layer of the plurality of layers, wherein all layers and levels of the coil are filled.

In one embodiment, the method further comprises a step for deciding on a coil winding geometry.

In one embodiment, the method further comprises a step for calculating the first length and the second length of the wire adapted for the decided coil winding geometry, and such that the first length and the second length are together a total length of the wire.

In one embodiment, winding the first length comprises rotating the form while the second length is fasten to the form using fastening means.

In one embodiment, winding the second length comprises rotating the form while the first length is already wound and hold fast around the form.

In one embodiment, winding the second length comprises rotating the form while the first length is fasten to the form using fastening means.

In one embodiment, winding the second length comprises revolving means for holding the end of the second length around the form.

In one embodiment, winding the first length comprises revolving means for holding the end of the first length around the form.

In one embodiment, winding the second length is done in a first stage, and winding the first length is done in a second stage.

In one embodiment, winding the first and second lengths comprises filling the plurality of layers and the plurality of levels such that all layers have an equal number of levels.

In a second aspect, the present invention relates to a coil wound using the method describe above comprising a wire with a first end and a second end and a form, wherein the coil is configured with a plurality of layers and a plurality of levels, wherein the wire first end and second end are both ending in an outer layer from the plurality of layers.

In one embodiment, the wire of the coil is a solid wire.

In one embodiment, the wire of the coil comprises a plurality of sub-wire.

In one embodiment, the coil has a substantially rectangular cross section.

In one embodiment, the coil has a substantially parallelogram cross section.

### Effects of the Invention

The present invention provides a technological advantage over known methods for winding a coil by winding a wire with two ends in a plurality of layers round a form in two different directions in that it results in the two ends of the wire ending in an outer layer of the coil plurality of layers.

The present invention provides several further advantageous effects:
- It makes it possible to wind the wire round the form without having a crossover of the wire.
- It makes it possible to wind the wire round the form without having to bend the wire with small bend radius.
- It makes it possible to provide a concentrated coil, meaning the coil has a higher slot fill factor than achieved by traditional coil winding methods from prior art.
- It makes it possible to provide a concentrated coil with a substantially rectangular or parallelogram cross-section.
- It makes it possible to have a concentrated coil where no turns are sticking out of the coil rectangle or parallelogram cross section when the coil is seen in a cross-section.
- It makes it possible to have an automated method for winding the coils. Such a method, ideally, should be totally unmanned/robotized.

### Brief description of the drawings

The above and further features of the invention are set forth with particularity in the appended claims and together with advantages thereof will become clearer from consideration of the following detailed description of exemplary embodiments of the invention given with reference to the accompanying drawings.

The invention will be further described below in connection with exemplary embodiments which are schematically shown in the drawings, wherein:
Fig. 1(A) shows a coil wound according to EP0920107 A2 prior art winding method.
Fig. 1(B) shows a coil wound according to US2005/0236921 A1 prior art winding method.
Fig. 1(C-E) shows the exemplary positions of two ends of a coil wound according to prior art coil winding methods.
Fig. 2 shows a side view of the coil winding arrangement according to one embodiment of the present invention.
Fig. 3(A) shows a side view of the coil winding arrangement according to one embodiment of the present invention where the second length 6 is temporarily fastened to the form 5.
Fig. 3(B) shows a side view of the coil winding arrangement according to one embodiment of the present invention where the end of second length 6 is held by a movable mechanism 10.
Fig. 4 shows a side view of the coil winding arrangement according to one embodiment of the present invention where the first length 4 is temporally fastened to the form 5.
Fig. 5 (A-C) shows exemplary coils wound according to one embodiment of the present invention.
Fig. 6 (A-D) shows a cross-section of four exemplary coils wound according to one embodiment of the present invention.
Fig. 7 (A-D) shows a cross-section of exemplary coils wound using different geometry according to embodiments of the present invention.

### Description of the reference signs

The following reference numbers and signs refer to the drawings:

| | |
|---|---|
| 100 | Coil |
| 1 | First end of the coil wire |
| 2 | Second end of the coil wire |
| 3 | Spool with a storage of wire |
| 4 | First length of the wire (pulled from the spool) |
| 5 | Form (for winding the wire on) |
| 6 | Second length of the wire |
| 7 | Means for temporarily or permanently attaching the wire to the form 5 so that it does not move relative to the form surface |
| 8 | Means for temporarily fastening the second length 6 to the form 5 |
| 9 | Means for temporarily fastening the first length 4 to the form 5 |
| 10 | Means for holding the end of the second length 6 |
| 10' | Means for holding the end of the first length 4 |
| 11 | First part of the coil |
| 12 | Second part of the coil |

### Detailed description of the invention

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

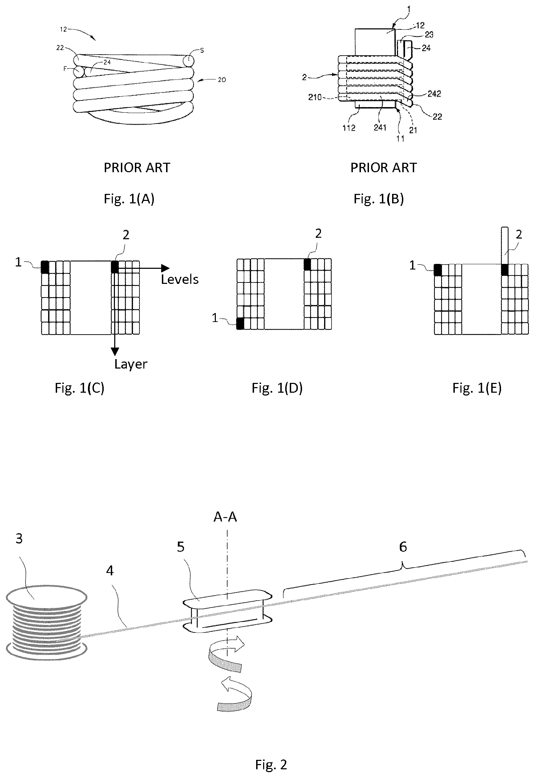

The following definitions will be used:
**Layers:** is a plurality of adjacent wire turns wound along the form radial direction as shown in Fig. 1(C).
**Levels:** is defined as the number of overlapping layers round the form, as shown in Fig. 1(C).

The invention will be further describe in connection with exemplary embodiments which are schematically shown in the drawings.

Fig. 1 presents coils wound using prior art winding methods. In Fig. 1(A), the coil is wound according to the method from EP0920107 A2. Fig. 1(A) shows that the lower turn goes out of the horizontal plane of the coil increasing the height of the coil. The result can be described as the coil not having a rectangular shape when seen in cross-section. Further, it can be noted that the slot-fill factor is not optimal and there is free space in the coil.

In Fig. 1(B), the coil is wound using the method disclosed in US2005/0236921 A1. A drawback of the method is that one of the ends is coming from inside the coil and it should be bent upwards at quite a sharp angle which can compromise the integrity of the conductor insulation.

Fig. 1(C-E) explain the drawback of prior art coil winding methods. When using the prior art methods, one of the coil ends 1 is always found in the outermost layer at the periphery of the coil, while the other coil end 2 always ends in the innermost layer on the surface of the form where the winding process begins. In addition, at the connection side of the coil, the coil head must be extended to allow for the take out of the inner end turn, resulting in an increased total length of the coil. The increased length is dependent on the allowable bending radius of the wire.

Fig. 2, 3 and 4 show the key principles of the method according to the present invention. Fig. 2, 3 and 4 show a spool 3 with a wire storage; the wire with a first end 1 and a second end 2 (not shown on the figures); a first portion of the wire comprising a first length 4 and a second length 6; a form 5; means 7 for temporarilly or permanently fastening the wire to the form 5; means 8 and 9 for fastening temporally one of the two lengths to the form 5 while the other length is wound round the form 5.

Prior to starting winding the coil, it can be decided on the desired geometrical arrangement of the coil that is to be achieved. This means the user decides on the number of layers and levels to be wound with the first length 4 of the wire, and the number of layers and levels to be wound by the second length 6 of the wire. Based on the desired geometrical arrangement required, first length 4 and second length 6 are determined, which together provide the total length of the wire to make a complete coil.

According to the present invention, the wire is placed against the form 5, such that the first length 4 and the second length 6 are extending from the form 5 as shown in Fig. 2. The form 5 can be set in a controllable rotation.

The wire is wound in a two stages method.

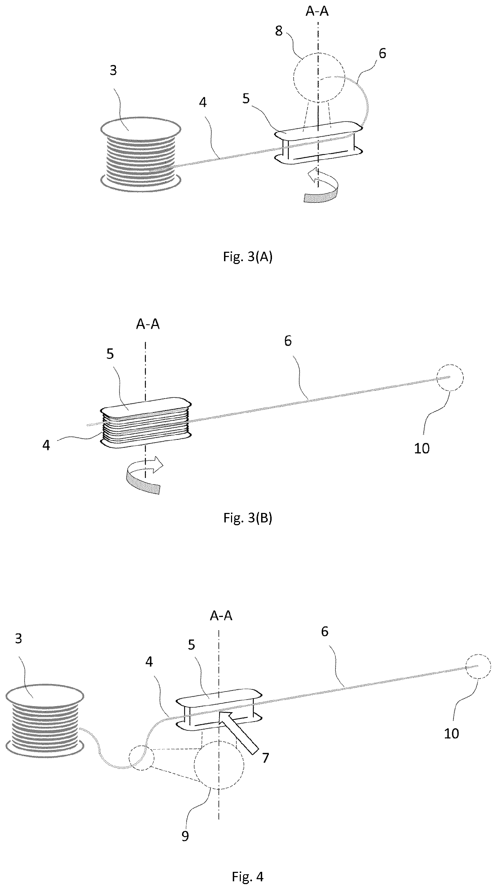

In a first stage of the winding method, as shown in Fig. 3(A), the second length 6 of the wire is temporally attached to the form 5 using means 8 for fastening the length 6 to the form 5. The form 5 is set in a controllable rotation, in a first direction, around an axial axis A-A running through the centre of the form 5, such that the first length 4 of the wire can be wound around the form 5 while the second length 6 of the wire is stationary relative to the form 5. The first length 4 of the wire is pulled from the spool 3 until the desired length 4 is achieved. Ultimately, the first length 4 is wound in a first direction around the form 5 in a plurality of layers and levels forming a first part of the coil 11. The wire can thereby be cut between the spool 3 and the form 5.

In the first stage of the winding method, the rotation of the form 5 relative to the spool 3 can be achieved using different arrangements. In one possible alternative arrangement, as already described in the paragraph above and illustrated in Fig. 3(A), the form 5 rotates around the axial axis A-A while the spool 3 is stationary. In another possible alternative arrangement, the form 5 is stationary while the spool 3 is rotating around the form 5. In yet another alternative arrangement, both the form 5 and the spool 3 are rotating relative to each other.

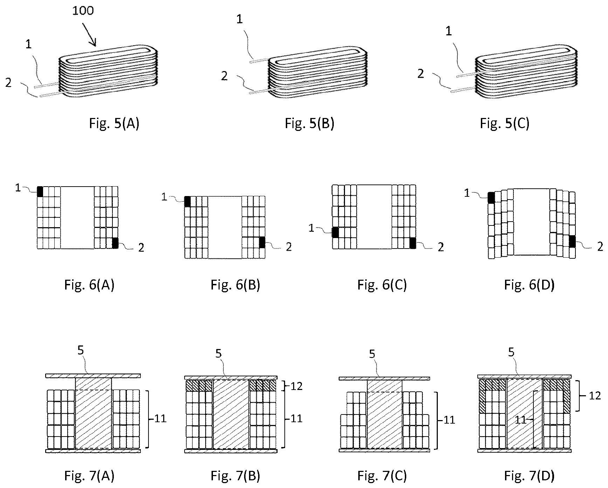

In a second stage, as shown in Fig 3(B), the second length 6 of the wire is wound around the form 5. The form 5 is set in a controllable rotation, in a second direction opposite the first direction, around the axial axis A-A running through the centre of the form 5. The position of the wire, while being wound round the form 5, can be controlled by means 10 for holding the second end 2 of the second length 6. Means 10 can be an automated manipulator or robot, or other means obvious to the skilled person. Ultimately, the second length 6 of the wire is wound around the form 5 in a combination of layer(s) and level(s) forming a second part of the coil 12. The second part of the coil 12 completes the first part of the coil 11 to form a concentrated coil with a high slot fill factor with a substantially rectangular or parallelogram cross section, and with both end 1 and end 2 arranged in the outer layer of the coil (as shown in Fig. 5 (A-C) and Fig. 6 (A-D)).

In the second stage of the winding method, the motion of the form 5 relative to the means 10 can be achieved using different arrangements. In one possible alternative arrangement, as already described in the paragraph above and illustrated in Fig. 3(B), the form rotates around an axial axis A-A while means 10 is approaching the form 5. In another possible alternative arrangement, the form 5 is stationary while means 10 is rotating around the form 5 and at the same time approaching the form 5. In yet another alternative arrangement, both form 5 and means 10 are rotating relative to each other, and means 10 is approaching form 5.

According to the present invention, all steps for first and second stage of the winding method, as described above, can be performed by automated manipulators or robots.

Fig.4 shows another embodiment of the present invention. In this embodiment, the two stages of the present invention coil winding method can be reversed, meaning the second stage is performed first, and the first stage is performed second.

In such an embodiment as shown in Fig. 4, the principles of the present invention remain the same, meaning the first length 4 and the second length 6 are wound round the form 5 in opposite directions.

First, in such an embodiment as shown in Fig. 4, the second length 6 is wound first around the form 5 in a plurality of layers and levels to form the first part of the coil 11, while the first length is held in a stationary position relative to the form using means 9 as shown in Fig. 4.

Second, in such an embodiment as shown in Fig. 4, the first length 4 is wound second in a plurality of layers and levels 12 to form the second part of the coil 12, while the second length end is kept under tension by a manipulator 10 as shown in Fig. 4. The second part of the coil 12 completes the first part of the coil 11 to form a concentrated coil with a high slot fill factor with a substantially rectangular or parallelogram cross section, and with both end 1 and end 2 arranged in the outer layer of the coil (as shown in Fig. 5 (A-C) and Fig. 6 (A-D)).

Also in this embodiment, as shown in Fig. 4, all steps can be performed by automated manipulators or robots.

In another embodiment of the present invention, the wire can be fastened to the form using means 7 for fastening the wire as shown in Fig. 4, so that it does not move relative to the form 5 when the wire is wound around the form.

Fig. 5 (A-C), Fig. 6 (A-D) and Fig. 7 show exemplary coils achieved according to the present invention.

Fig 5 (A-C) show that both wire first end 1 and second end 2 are to be found at the periphery (outer layer) of the coil, still not sticking out of the rectangular or parallelogram of the coil cross-section.

Fig. 6 (A-D) shows that being in the outer layer the wire ends can be in any of the rows of turns. The coils in Fig. 6 (A-C) have rectangular cross-section, while the coil in Fig. 6(D) has parallelogram cross-section.

The present invention makes it possible for the first end 1 and second end 2 of the wire to end in the outer layer of the coil as shown in Fig. 5 (A-C), without having a crossover or bending of the wire in the coil. The achieved coil is a concentrated coil, with a high slot fill factor, with little or no air in the slot and no parts sticking-out sideways of the coil, as shown in the exemplary coils cross-section of Fig. 6 (A-D).

Further, Fig. 7 (A-D) shows fours cross-sections of coils wound using different geometries. The term different 'geometries' meaning that the cross-section of the first part of the coil 11 and cross the second part of the coil 12 can have different combinations of layer(s) and level(s) as shown in Fig. 7 (A-D). Having the capability to wind the coil using different geometries present an advantage in that it makes it possible to have both end 1 and end 2 at a determine location in the outer layer of the coil.

It should be understood that the methods described above are just examples of possible implementation of the general principle disclosed. Other embodiments are possible.

### Industrial Applicability

The invention according to the application finds use in winding coil for electric machines.

## Claims

1. A method for winding a coil (100) for electric machines, wherein the coil (100) is arranged with a plurality of layers and a plurality of levels, wherein the method comprises the following steps:
- placing a wire against a form (5), leaving a first length (4) of the wire and a second length (6) of the wire extending from the form (5), wherein the first length (4) has a first end (1) and the second length (6) has a second end (2);
- winding the first length (4) in a first direction round the form (5), such that the first end (1) of the first length (4) is ending in an outer layer of the plurality of layers;
- winding the second length (6) in a second direction round the form (5), wherein the second direction is opposite the first direction, wherein the second end (2) of the second length (6) is ending in an outer layer of the plurality of layers, wherein all layers and levels of the coil are filled.

2. A method according to claim 1, further comprising a step for deciding on a coil winding geometry.

3. A method according to claim 1 and 2, further comprising a step for calculating the first length (4) and the second length (6) of the wire adapted for the decided coil winding geometry, and such that the first length (4) and the second length (6) are together a total length of the wire.

4. A method according to claims 1 to 3, wherein winding the first length (4) comprises rotating the form (5) while the second length is fasten to the form (5) using fastening means (8).

5. A method according to claim 1 to 4, wherein winding the second length (6) comprises rotating the form (5) while the first length (4) is already wound around and hold fast around the form (5).

6. A method according to claims 1 to 5, wherein winding the second length (6) comprises rotating the form (5) while the first length is fasten to the form (5) using fastening means (9).

7. A method according to claims 1 to 6, wherein winding the second length (6) comprises revolving means (10) for holding the end of the second length (6) around the form (5).

8. A method according to claims 1 to 7, wherein winding the first length (4) comprises revolving means (10') for holding the end of the first length (4) around the form (5).

9. A method according to claims 1 to 8, wherein winding the second length (6) is done in a first stage, and winding the first length (4) is done in a second stage.

10. A method according to claims 1 to 9, wherein winding the first (4) and second (6) lengths comprises filling the plurality of layers and the plurality of levels such that all layers have an equal number of levels.

11. A coil (100) wound using the method according to claim 1 to 10, comprising a wire with a first end (1) and a second end (2) and a form (5), wherein the coil (100) is configured with a plurality of layers and a plurality of levels, wherein the wire first end (1) and second end (2) are both ending in an outer layer from the plurality of layers.

12. A coil according to claim 11, wherein the wire is a solid wire.

13. A coil according to claims 11 to 12, wherein the wire comprises a plurality of sub-wire.

14. A coil according to claims 11 to 13, wherein the wire has a substantially rectangular cross section.

15. A coil according to claims 11 to 14, wherein the coil has a substantially parallelogram cross section.
